# EUROPÄISCHE PATENTSCHRIFT

(11) **EP 3 510 862 B1**
(45) Veröffentlichungstag und Bekanntmachung des Hinweises auf die Patenterteilung: **16.03.2022**
(21) Anmeldenummer: 19157359.1
(22) Anmeldetag: 03.01.2018
(51) Int. Cl.: A01M 7/00

(54) **VERFAHREN UND SPRITZEINRICHTUNG ZUM AUSBRINGEN EINER SPRITZFLÜSSIGKEIT AUF EINER LANDWIRTSCHAFTLICHEN FLÄCHE**
METHOD AND SPRAYING DEVICE FOR APPLYING A SPRAYED LIQUID ON AN AGRICULTURAL AREA
PROCÉDÉ ET DISPOSITIF DE PULVÉRISATION DESTINÉS À DISTRIBUER UN LIQUIDE DE PULVÉRISATION SUR UNE SURFACE AGRICOLE

(30) Priorität: 17.01.2017 DE 102017100778
(43) Veröffentlichungstag der Anmeldung: 17.07.2019
(62) Teilanmeldung aus: 18401001.5
(73) Patentinhaber: Amazonen-Werke H. Dreyer SE & Co. KG, 49205 Hasbergen (DE)
(72) Erfinder: Marggraf, Ulla, 38124 Braunschweig (DE)

(56) Entgegenhaltungen:
- EP-A1- 1 932 423
- EP-A1- 3 326 461
- EP-A1- 3 332 639
- WO-A1-2012/152758
- WO-A1-2013/087103
- DE-A1-102009 026 234

## Beschreibung

Die Erfindung betrifft ein Verfahren zum Ausbringen einer Spritzflüssigkeit auf einer Fläche, insbesondere einer landwirtschaftlichen Fläche, gemäß dem Oberbegriff des Anspruchs 1. Schließlich betrifft die Erfindung eine Spritzeinrichtung gemäß dem Oberbegriff des Anspruchs 9.

Spritzvorrichtungen werden insbesondere im landwirtschaftlichen Bereich vielfach eingesetzt. Typischerweise handelt es sich dabei um sogenannte Feldspritzen. Sie dienen in der Regel zum Ausbringen von Spritzflüssigkeiten auf typischerweise landwirtschaftlich genutzten Flächen, wie Äckern, Feldern oder ähnlichem. Dabei wird die Spritzflüssigkeit auf der Fläche entsprechend einer Vorgabe verteilt. Im einfachsten Fall erfolgt eine gleichmäßige Verteilung, gegebenenfalls kann die ausgebrachte Menge aber auch lokal unterschiedlich sein, beispielsweise zur Anpassung an Bodenunterschiede.

Die ausgebrachte Spitzflüssigkeit enthält dabei üblicherweise wenigstens einen Wirkstoff. Bei dem oder den Wirkstoffen kann es sich beispielsweise um Düngemittel, Fungizide, Pestizide, Herbiziden wie auch andere Mittel handeln. Üblicherweise wird ein konzentriertes Spritzmittel verwendet, das den wenigstens einen Wirkstoff oder auch mehrere Wirkstoffe enthält. Dieses Spritzmittel wird mit einer Trägerflüssigkeit, wie insbesondere Wasser, derart verdünnt, dass die Wirkstoffe in einer gut pumpbaren und somit gut dosierbaren Menge vorliegen.

Diese Vorbereitung der Spritzflüssigkeit beziehungsweise die eigentliche Vermischung von Spritzmittel und Trägerflüssigkeit stellt dabei eine große Herausforderung dar. Eine Bestückung eines großen Tanks mit fertig angemischter Spritzflüssigkeit aus Spritzmittel und Trägerflüssigkeit führt in der Regel zu zu entsorgenden Restmengen.

Daher wird im Stand der Technik versucht, mit Mischkammern in der Nähe der Spritzdüsen der Spritzeinrichtung zu arbeiten, in denen die Vermischung von hoch konzentriertem Spritzmittel mit der Trägerflüssigkeit erfolgt. Die EP 1 749 443 A1 beschreibt beispielsweise ein derartiges landwirtschaftliches Spritzgerät, bei dem die Spritzflüssigkeit aus einer Trägerflüssigkeit und wenigstens einem Wirkstoff in einer Mischkammer vermischt wird, bevor sie ausgebracht wird. Gemäß der DE 10 2015 004 241 A1 kann der auszubringende Wirkstoff in einem Minimischbehälter vordosiert werden. Aus der EP 1 932 424 A1 ist dagegen eine Spritzvorrichtung zum Ausbringen von Flüssigkeiten für landwirtschaftliche Zwecke bekannt, bei der die Zusammenführung und Vermischung eines Wirkstoffs mit einer Trägerflüssigkeit in der Mischkammer unter zumindest annähernd konstantem Druck erfolgt.

Aus der WO 2012/152758 A1 ist ein Spritzgerät zum Ausbringen von Spritzmittel bekannt, bei dem Trägerflüssigkeit und Wirkstoffkonzentrate in einer Mischkammer vermischt werden. Die so entstandene Flüssigkeit sowie eine Spritzbrühe werden über zwei Ausbringleitungen zu den Ausbringdüsen geleitet. Die Ausbringdüsen sind über ein Zwischenstück gleichzeitig an beide Ausbringleitungen angeschlossen.

Nachteilig an den bekannten Spritzvorrichtungen und Verfahren zum Ausbringen einer Spritzflüssigkeit auf einer landwirtschaftlichen Fläche ist dabei, dass sowohl die Reaktionszeiten der Spritzeinrichtung wie auch die Genauigkeit bei der Anmischung aufgrund sehr kleiner Mengen hoch konzentrierter Spritzmittel zu wünschen übrig lassen. Außerdem variiert die Verdünnung und damit die Genauigkeit je nach verwendetem Spritzmittel. Schließlich ist eine sehr große Spannweite der Pumpenanforderungen erforderlich.

Es ist daher eine Aufgabe der Erfindung, ein Verfahren zum Ausbringen einer Spritzflüssigkeit auf einer insbesondere landwirtschaftlichen Fläche bereitzustellen, das insbesondere die vorstehend genannten Nachteile beseitigt. Bevorzugt sollen die Geschwindigkeit und die Genauigkeit bei der Verdünnung des Spritzmittels verbessert werden.

Diese Aufgabe wird gelöst durch ein Verfahren zum Ausbringen einer Spritzflüssigkeit auf einer landwirtschaftlichen Fläche mit den Maßnahmen des Anspruchs 1. Das Verfahren wird vorzugsweise mittels einer Spritzeinrichtung ausgeführt beziehungsweise einem Flüssigkeitskreislauf für eine Spritzeinrichtung. Das Verfahren eignet sich dabei auch unmittelbar zum Betreiben einer Spritzvorrichtung, vorzugsweise einer Feldspritze. Dabei wird wenigstens ein Spritzmittel mit einer Trägerflüssigkeit zur Spritzflüssigkeit vermischt und ausgebracht. Das Spritzmittel enthält vorzugsweise wenigstens einen Wirkstoff. Das erfindungsgemäße Verfahren zeichnet sich dadurch aus, dass einerseits wenigstens eine Vormischungsflüssigkeit in zumindest einem Vormischungsbehälter aus einer Menge des insbesondere hoch konzentrierten Spritzmittels und einer Menge Trägerflüssigkeit hergestellt wird, und dass andererseits diese wenigstens eine Vormischungsflüssigkeit zum Ausbringen mit einer weiteren Menge Trägerflüssigkeit zur ausbringbaren Spritzflüssigkeit verdünnt wird. Dies bietet den Vorteil, dass das insbesondere ursprünglich hoch konzentrierte Spritzmittel zunächst mit Trägerflüssigkeit verdünnt wird. So lässt es sich besser pumpen und dosieren. Es muss zum Erreichen der gleichen Endkonzentration nämlich eine besser abmessbare, größere Menge Vormischflüssigkeit als Spritzmittel zudosiert werden. Das Herstellen beziehungsweise Anmischen der Vormischflüssigkeit erfolgt insbesondere durch die beziehungsweise mittels der Spritzeinrichtung. Als Vorteile sind zu nennen, dass die Pumpengröße variabler ist als im Stand der Technik, da die Dosierung weniger zeitkritisch ist. Außerdem kann die Vormischung auf Vorrat hergestellt werden. Die Vormischung für jeden Wirkstoff kann wahlweise in einem einzigen oder mehreren Vormischungsbehältern bevorratet und/oder angemischt werden.

Vorzugsweise wird für jedes verwendete Spritzmittel beziehungsweise Wirkstoff eine separate Vormischungsflüssigkeit hergestellt. Dabei können mehrere oder alle Vormischflüssigkeiten in einem Arbeitsgang oder mehreren Arbeitsgängen parallel oder auch nacheinander ausgebracht werden. So lassen sich Vormischungsflüssigkeiten für verschiedene Zwecke und/oder Flächen bevorraten beziehungsweise flächenspezifisch ausbringen.

Jede Vormischungsflüssigkeit wird insbesondere in zumindest einem separaten Vormischungsbehälter bevorratet. Auch kann das Anmischen insbesondere durch Verdünnen beziehungsweise das Herstellen in separaten Behältern erfolgen. Damit kann jede Vormischungsflüssigkeit individuell angemischt und bevorratet werden. Sowohl gezielte Herstellung wie auch Entnahme ist so möglich. Es ist also vorgesehen, dass die Vormischung eines jeden Wirkstoffes separat vorliegt. Sie kann jeweils in einem oder mehreren Vormischungsbehältern bevorratet oder angemischt werden.

Besonders bevorzugt wird die wenigstens eine Vormischungsflüssigkeit mittels eines Vormischungskreislaufes gefördert und/oder umgepumpt, vorzugsweise kontinuierlich. Vorzugsweise ist hierfür wenigstens ein Vormischungskreislauf vorgesehen, weiter vorzugsweise für jede der Vormischungsflüssigkeiten ein Vormischungskreislauf. Das Umpumpen erfolgt vorzugsweise zwischen einem Vormischungstank und wenigstens einer Spritzdüse. Somit kann vorzugsweise kontinuierlich die Vormischungsflüssigkeit an die Spritzdüse gefördert werden. Im Bereich der Spritzdüse kann eine Verdünnung der Vormischflüssigkeit mittels Trägerflüssigkeit zur Spritzflüssigkeit erfolgen. Die Spritzflüssigkeit erhält so die korrekte Konzentration zum Ausbringen. Außerdem erfolgt dies vor allem sehr schnell. Schließlich ist eine Umwälzung der Vormischung wie auch eine Vermischung im Vormischbehälter aufgrund der überschaubaren Menge auf einfache Weise möglich.

Insbesondere wird ein vorbekanntes Volumen der oder jeder Vormischflüssigkeit angemischt. Die Vormischflüssigkeit wird vorzugsweise in einem oder wenigstens einem Vormischungsbehälter beziehungsweise Tank mit bekanntem Volumen angemischt. Weiter vorzugsweise weisen alle Vormischungsbehälter dasselbe Volumen auf. Besonders bevorzugt ist ein Volumen von zwischen 1 Liter und 50 Liter, weiter bevorzugt zwischen 5 Liter und 20 Liter, insbesondere von 1, 5 oder 10 Liter vorgesehen. Bei einem bekannten Volumen, vorzugsweise identischen Volumen kann jeweils auf eine bekannte spezifische Konzentration des jeweiligen Spritzmittels verdünnt werden. Dies vereinfacht die Anmischung und die Weiterverarbeitung. Übrig bleibende Mengen der Vormischung sind im Vergleich zur "Komplettverdünnung", also einer Verdünnung und Bereitstellung der fertigen Mischung im Vorratsbehälter der Spritzvorrichtung, gut handhabbar, da es sich um wesentlich kleinere Mengen handelt. Es wird also jeweils nur eine vergleichsweise geringe Menge der Vormischung vorgehalten, so dass ggf. nur eine geringe Menge übrigbleibt und entsorgt werden muss. Da die Vormischung im Vergleich zur Komplettverdünnung höher konzentriert ist, ist die vergleichsweise geringe Menge der Vormischung jedoch ergiebiger als dieselbe Menge an komplettverdünnter Flüssigkeit. Der Vormischungsbehälter kann bei Bedarf jeweils rechtzeitig wieder mit Wirkstoff und Trägerflüssigkeit zur Bereitstellung einer Vormischung aufgefüllt werden.

Erfindungsgemäß wird das Spritzmittel beziehungsweise der wenigstens eine Wirkstoff mit der Trägerflüssigkeit zur Vormischflüssigkeit derart verdünnt, dass eine vorherbestimmte Konzentration des Spritzmittels beziehungsweise des wenigstens einen Wirkstoffs erreicht wird. So kann eine bestimmte, vorzugsweise für das jeweilige Spritzmittel optimale Konzentration in der Vormischflüssigkeit eingestellt werden. Diese Vormischflüssigkeit kann dann auf einfache und reproduzierbare Weise zur eigentlichen Spritzflüssigkeit weiter verdünnt werden. Die vorverdünnte Vormischflüssigkeit lässt sich aufgrund des größeren Volumens beziehungsweise der geringeren Dichte des Spritzmittels wesentlich einfacher und vor allem genauer fördern als das hoch konzentrierte Spritzmittel.

Vorzugsweise werden alle Vormischungsflüssigkeiten mit derart vordefinierter Konzentration des Spritzmittels beziehungsweise des wenigstens einen Wirkstoffs angemischt. So ist ein identisches oder vergleichbares Verdünnungsverhältnis mit Trägerflüssigkeit zum Ausbringen für eine vorgesehene Wirkung erforderlich. Dies bedeutet, dass ein gleiches oder zumindest ähnliches Verdünnungsverhältnis für alle Vormischungen vorgesehen sein kann. Dies verkleinert deutlich den Bereich unterschiedlicher Verdünnungen an den Spritzdüsen, der üblicherweise an einer Spritzeinrichtung vorzusehen ist, um völlig unterschiedliche Spritzmittel mit unterschiedlichen Verdünnungserfordernissen ausbringen zu können. Durch die Vormischung erfolgt also eine Homogenisierung der Verdünnungsbereiche.

Es kann vorgesehen sein, dass vorzugsweise alle Vormischungsflüssigkeiten mit derart vordefinierter Konzentration des Spritzmittels beziehungsweise des wenigstens einen Wirkstoffs angemischt werden, dass die für den Spritzvorgang zu fördernde Rate an Vormischungsflüssigkeit auf die hierfür verwendete Pumpe abgestimmt ist. Hierdurch können weitere Nachteile des Standes der Technik behoben werden. Insbesondere wird das Problem gelöst, dass je nach Wirkstoff eine größere oder kleinere Menge pro Zeiteinheit für die vorgesehene Behandlung der Pflanzen gefördert werden muss. Es kann nun also vorgesehen sein, dass unter Berücksichtigung des verwendeten Wirkstoffs und ggf. weiterer Parameter, wie Fahrgeschwindigkeit, Arbeitsbreite usw. die zu fördernde Rate an Wirkstoff pro Fläche bzw. Zeiteinheit ermittelt wird. Unter Berücksichtigung derfür die Förderung der Vormischung verwendeten Pumpe, insbesondere der Förderleistung der Pumpe kann nun das Verhältnis der Vormischung so gewählt werden, dass die für die geplante Behandlung notwendige Wirkstoffmenge pro Zeiteinheit mit der vorhandenen Pumpe in optimaler Weise gefördert werden kann. In dem Fall wenn ein Wirkstoff mit einer großen Aufwandmenge pro Fläche mit einer Pumpe mit vergleichsweise kleinem Fördervolumen verarbeitet werden muss, würde das Verdünnungsverhältnis der Vormischung also in der Weise angepasst, dass eine konzentriertere Vormischung gewählt wird als bei einem Wirkstoff mit kleiner Aufwandmenge und/oder einer Pumpe mit einem großen Fördervolumen.

Die Aufwandmenge des jeweils verwendeten Wirkstoffs ist vorzugsweise in einem Steuergerät der Feldspritze hinterlegt oder wird durch den Anwender in dieses eingegeben. Zusätzlich ist die optimale Förderleistung der Pumpe zur Förderung der Vormischung des jeweiligen Wirkstoffes bzw. der Bereich möglicher Förderleistungen der Pumpe bekannt. Außerdem ist die Arbeitsbreite der Feldspritze in dem Steuergerät hinterlegt oder wird durch den Anwender ausgewählt bzw. eingegeben. Vorzugsweise ist die verwendete Fahrzeuggeschwindigkeit oder zumindest ein Bereich möglicher Fahrgeschwindigkeiten dem Steuergerät ebenfalls bekannt oder wird durch den Anwender eingegeben. Somit sind alle für die Bestimmung der zu fördernden Aufwandmenge also Wirkstoffmenge pro Fläche bzw. bei Berücksichtigung der Geschwindigkeit der Wirkstoffmenge pro Zeit bekannt, so dass das Vormischungsverhältnis und damit die in den Vormischungsbehälter zu dosierende Menge Wirkstoff und Trägerflüssigkeit bekannt ist. Entsprechend werden idealerweise die Pumpen und Ventile zur Förderung des reinen Wirkstoffs und der Trägerflüssigkeit in den jeweiligen Vormischungsbehälter angesteuert, um das für den jeweiligen Vormischungsbehälter ermittelte Vormischungsverhältnis herzustellen.

Erfindungsgemäß wird eine ausbringfähige Verdünnung der Vormischungsflüssigkeit erst zur Abgabe aus der entsprechenden Spritzdüse vorgenommen. Damit kann die Spritzflüssigkeit bedarfsgerecht aus der Vormischungsflüssigkeit hergestellt, insbesondere verdünnt werden. Die üblicherweise anfallenden, größeren Mengen der fertig angemischten Spritzflüssigkeit entfallen.

Die eingangs geschilderte Aufgabe wird auch gelöst durch einen Flüssigkeitskreislauf für eine Spritzeinrichtung, vorzugsweise eine Feldspritze. Der Flüssigkeitskreislauf ist vorgesehen zum Ausbringen einer Spritzflüssigkeit mit insbesondere wenigstens einem Wirkstoff auf einer landwirtschaftlichen Fläche. Vorzugsweise kann dies mit einem wie oben beziehungsweise in den Ansprüchen beschriebenen Verfahren erfolgen. Der Flüssigkeitskreislauf zeichnet sich dadurch aus, dass einerseits wenigstens ein Vormischungsbehälter zur Herstellung einer konzentrierten Vormischungsflüssigkeit aus wenigstens einem Spritzmittel und einer Trägerflüssigkeit vorgesehen ist. Andererseits liegt die Vormischungsflüssigkeit zum Ausbringen in mit einer weiteren Menge Trägerflüssigkeit verdünnten Form als Spritzflüssigkeit vor. Der Vormischungsbehälter dient dabei zum Herstellen und Aufbewahren der Vorm ischungsflüssigkeit.

Vorzugsweise ist für jede der Vormischungsflüssigkeiten zumindest ein separater Vorm ischungsbehälter vorgesehen. Besonders bevorzugt weisen mehrere der, weiter vorzugsweise alle Vormischungsbehälter dasselbe Volumen auf. So kann eine vordefinierte Menge der jeweiligen Vormischung hergestellt werden. Die Mischungsverhältnisse sind auf einfache Weise ermittelbar. Besonders bevorzugt ist ein Volumen von zwischen 1 Liter und 50 Liter, weiter bevorzugt zwischen 5 Liter und 20 Liter, insbesondere von 1, 5 oder 10 Liter vorgesehen. Bei einem bekannten Volumen, vorzugsweise identischen Volumen kann jeweils auf eine bekannte spezifische Konzentration des jeweiligen Spritzmittels verdünnt werden. Dies vereinfacht die Anmischung und die Weiterverarbeitung.

Es kann ebenfalls vorgesehen sein, in Abhängigkeit des verwendeten Wirkstoffs und weiterer Parameter wie bspw. Arbeitsbreite und Fahrgeschwindigkeit die zu fördernde Rate an Wirkstoff vorzugsweise mittels eines Steuergerätes zu ermitteln und die Vormischung an die Förderleistung der Pumpe anzupassen, die für die Förderung der jeweiligen Vormischung vorgesehen ist. Auf diese Weise kann insbesondere durch das Steuergerät eine optimale Konzentration der jeweiligen Vormischung ermittelt werden, so dass diese an die Förderleistung der Pumpe angepasst ist. Vorzugsweise ist das Steuergerät ausgebildet, die Ventile und Pumpen zur Förderung des reinen Wirkstoffs und der Trägerflüssigkeit derart anzusteuern, dass das Vormischungsverhältnis im Vormischungsbehälter in berechneter Weise eingestellt wird.

Es ist insbesondere wenigstens ein Flüssigkeitskreislauf zum Umpumpen der wenigstens einen Vormischungsflüssigkeit zwischen dem wenigstens einen Vormischungsbehälter und wenigstens einer Spritzdüse der Spritzeinrichtung vorgesehen. Des Weiteren kann insbesondere ein separater Flüssigkeitskreislauf für jede Vormischungsflüssigkeit vorgesehen sein. Damit wird erreicht, dass die oder jede Vormischungsflüssigkeit jederzeit in ausreichender Menge und mit gleichbleibender Konzentration an der Düse zur Verfügung steht. Die abschließende Vermischung beziehungsweise Verdünnung mit Trägerflüssigkeit zur Konzentration des Spritzmittels zum Ausbringen als Trägerflüssigkeit wird damit deutlich vereinfacht, da die Vormischungsflüssigkeit in bekannter und gut dosierbarer Konzentration vorliegt. Vorzugsweise ist zusätzlich ein Kreislauf für die Trägerflüssigkeit zur Bereitstellung derselben an der Spritzdüse vorgesehen.

Die Spritzdüsen der Spritzeinrichtung sind für eine düsenweise Freigabe der Abgabe der Spritzflüssigkeit vorgesehen, indem ein düsenweises Zusammenmischen von Vormischflüssigkeit und Trägerflüssigkeit erfolgt. Damit wird ein gezieltes Anmischen in unmittelbarer Nähe der Spritzdüse ermöglicht.

Erfindungsgemäß erfolgt eine ausbringfähige Verdünnung der Vormischungsflüssigkeit erst bei Freigabe der entsprechenden Spritzdüse Dabei ist vorzugsweise eine separate Ventileinheit und/oder Dosierpumpe je Spritzdüse beziehungsweise Teilbreite vorgesehen. So kann gezielt erst unmittelbar beim oder kurz vor dem Ausbringen die Fertigmischung der Spritzflüssigkeit aus Vormischungsflüssigkeit und Trägerflüssigkeit erfolgen. Damit erfolgt eine besonders bedarfsgerechte Anmischung.

Wenigstens ist eine Mischkammer zur Verdünnung der wenigstens einen Vormischflüssigkeit mit Trägerflüssigkeit in der Nähe der Spritzdüse vorgesehen, vorzugsweise eine separate Mischkammer je Spritzdüse der Spritzvorrichtung. Damit kann die Vermischung vorzugsweise unmittelbar an oder in der Nähe der Spritzdüse vorgenommen werden.

Die Aufgabe wird außerdem gelöst durch eine Spritzvorrichtung, vorzugsweise Feldspritze, zum Ausbringen einer Spritzflüssigkeit auf einer landwirtschaftlichen Fläche gemäß Anspruch 9. Die Spritzvorrichtung weist einen Flüssigkeitskreislauf gemäß vorstehenden Beschreibungen beziehungsweise den entsprechenden Patentansprüchen auf. Erfindungsgemäß ist die Spritzeinrichtung zum Ausführen eines Verfahrens gemäß den vorstehenden Beschreibungen eingerichtet.

Ein bevorzugtes Ausführungsbeispiel der Erfindung wird im Folgenden anhand der Zeichnungen näher beschrieben. In diesen zeigen:
Fig. 1 eine schematische Darstellung einer erfindungsgemäßen Feldspritze, und
Fig. 2 einen erfindungsgemäßen Flüssigkeitskreislauf für eine Spritzvorrichtung.

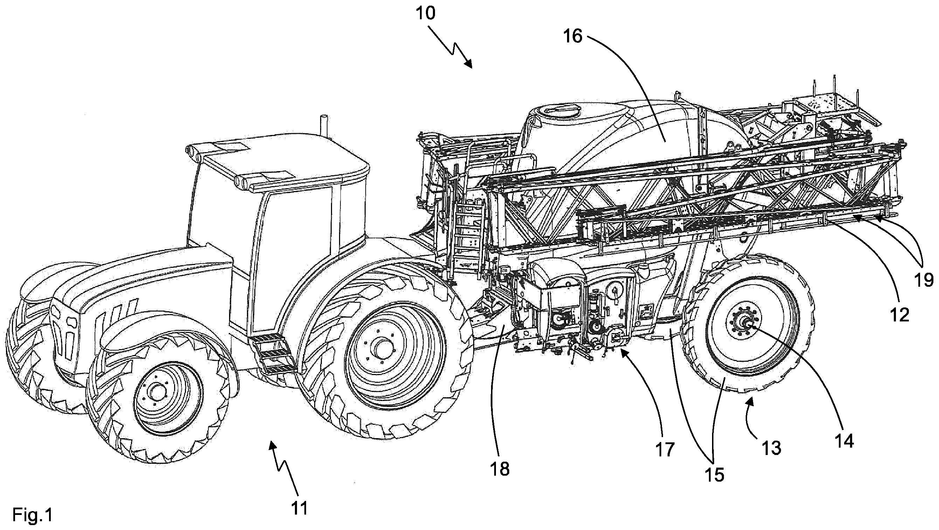

In der Fig. 1 ist eine erfindungsgemäße Feldspritze 10 in einer perspektivischen Darstellung gezeigt, die von einem Zugfahrzeug 11 gezogen wird. Die Feldspritze 10 ist dabei mit für den Transport eingeklapptem Spritzgestänge 12 dargestellt. Als Fahrwerk 13 ist dabei eine Achse 14 mit zwei Rädern 15 vorgesehen.

Die Feldspritze 10 weist in üblicher Weise einen Vorratstank 16 für Spritzflüssigkeit auf. Bei der Spritzflüssigkeit handelt es sich üblicherweise um Wasser wahlweise versetzt mit einem oder mehreren Wirkstoffen oder weiteren Stoffen, wie zum Beispiel Düngemittel. Außerdem ist hier exemplarisch ein Mischtanksystem 17 gezeigt, das seitlich am Rahmen 18 der Feldspritze 10 angeordnet ist.

Zum Ausbringen wird das Spritzgestänge 12 dann in üblicher Weise ausgeklappt, so dass es auf beiden Seiten praktisch im rechten Winkel zur Fahrtrichtung der Feldspritze 10 absteht. Am Spritzgestänge 12 ist eine Vielzahl von Spritzdüsen 19 angeordnet. Die Spritzdüsen 19 sind dabei typischerweise mehr oder weniger gleichmäßig entlang des Spritzgestänges 12 verteilt angeordnet, so dass ein gleichmäßiges Ausbringen der fertigen Spritzflüssigkeit, also nach Vermischen von Trägerflüssigkeit mit den gewünschten Wirkstoffen beziehungsweise Spritzmitteln sichergestellt werden kann.

Vor dem Ausbringen wird die Spritzflüssigkeit aber in der Regel noch mit wenigstens einem Wirkstoff aus einem Wirkstofftank versetzt. Dies erfolgt erfindungsgemäß durch Zudosieren des Wirkstoffs zur Spritzflüssigkeit in einer Dosiervorrichtung. Die Trägerflüssigkeit wird dazu zunächst aus dem Vorratstank 16 mittels einer Pumpe zur Dosiervorrichtung gefördert.

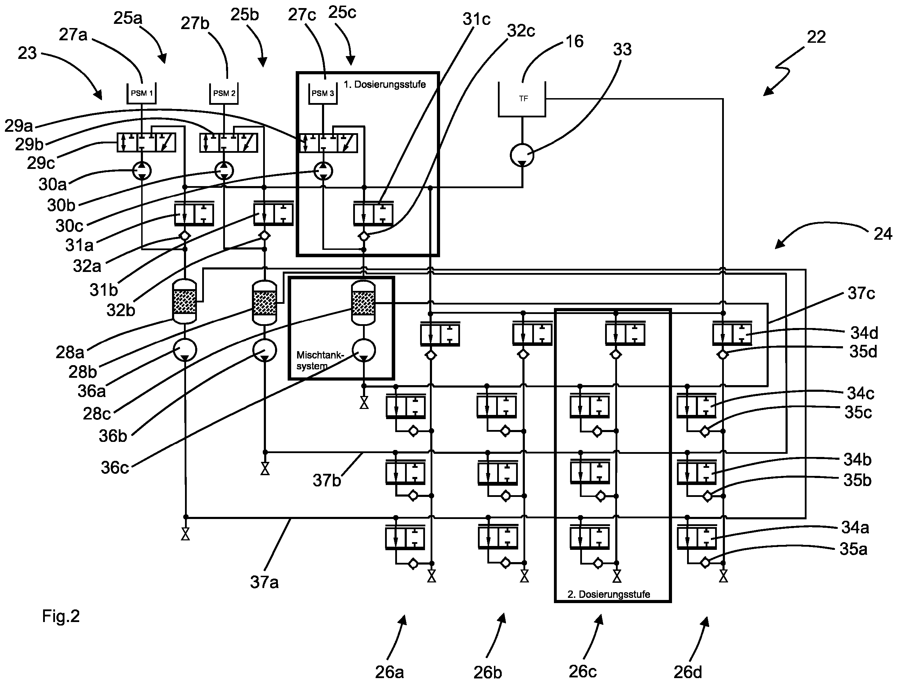

Zur Veranschaulichung ist dazu in Fig. 2 ausschnittsweise ein beispielhafter erfindungsgemäßer Flüssigkeitskreislauf 22 skizziert. Der Flüssigkeitskreislauf 22 zeigt hier nur die für den erfindungsgemäßen Betrieb wichtigen Bestandteile der zugehörigen Feldspritze 10.

In der Dosiervorrichtung des Flüssigkeitskreislaufs 22 sind demnach zwei Dosierstufen hintereinander geschaltet. Es handelt sich um eine erste Dosierstufe 23 und eine zweite Dosierstufe 24. Die zweite Dosierstufe 24 übernimmt dabei die in der ersten Dosierstufe 23 vorbereiteten Vormischungen mit definierter Konzentration.

Jede der Dosierstufen 23, 24 weist im beschriebenen Ausführungsbeispiel allerdings mehrere Dosiereinheiten 25 beziehungsweise 26 auf. Hier sind demnach jeweils drei Dosiereinheiten 25a, 25b, 25c beziehungsweise 26a, 26b, 26c vorgesehen.

Die Anzahl der parallelen Dosiereinheiten 25, 26 kann abhängig von der gewünschten Anzahl an unabhängig voneinander steuerbaren Zudosierungen von Wirkstoffen, wie beispielsweise Pflanzenschutzmitteln (PSM) und ähnlichem, gewählt werden. Typischerweise handelt es sich daher dabei um Dosiereinheiten 25, 26 in Modulform, so dass diese also nahezu beliebig kombinierbar oder entfernbar sein können.

Indem tatsächlich wie im Ausführungsbeispiel mehrere Dosiereinheiten 25a, 25b, 25c beziehungsweise 26a, 26b, 26c, 26d vorhanden sind, kann eine gleichzeitige Zudosierung verschiedener Wirkstoffe beziehungsweise Spritzmittel zur Trägerflüssigkeit zur Herstellung der ausbringbaren Spritzflüssigkeit in einem Arbeitsgang erfolgen. So können in einer Fahrt über eine landwirtschaftliche Fläche gleichzeitig mehrere Spritzmittel beziehungsweise Wirkstoffe ausgebracht werden. Dabei können auch entsprechende Wechselwirkungen der Mittel berücksichtigt werden. Um ein paralleles Ausbringen zu ermöglichen, sind einerseits alle ersten Dosiereinheiten 25a, 25b, 25c und andererseits alle zweiten Dosiereinheiten 26a, 26b, 26c, 26d jeweils parallel zueinander angeordnet.

Jede erste Dosiereinheit 25a, 25b, 25c beinhaltet dabei jeweils einen Wirkstofftank oder Wirkstoffbehälter 27a, 27b, 27c. Diese Wirkstoffbehälter 27a, 27b, 27c sind hier zur Bevorratung je eines Wirkstoffs oder Spritzmittels, wie hier beispielsweise von Pflanzenschutzmitteln PSM1, PSM2, PSM3 vorgesehen. Aus diesen Wirkstoffbehältern 27a, 27b, 27c kann die gewünschte Menge des jeweiligen Wirkstoffs entnommen werden und erfindungsgemäß als Vormischung bereitgestellt werden.

Zur Vormischung beziehungsweise Vordosierung der jeweiligen Wirkstoffe sind separate Vormischbehälter 28a, 28b, 28c vorgesehen. In diesen Vormischbehältern 28a, 28b, 28c wird der Wirkstoff auf die gewünschte Konzentration der Vormischung durch Zugabe von Trägerflüssigkeit, wie beispielsweise Wasser, gebracht. Vormischungsbehälter und Vorratsspeicher können als Einheit im jeweiligen Vormischbehälter 28 zusammengefasst oder separat angeordnet sein.

Zur Steuerung der Mengen an Wirkstoff und Spritzflüssigkeit dienen hier jeweils separate Dosierventile 29a, 29b, 29c, die als 3/3-Wegeventile ausgebildet sind. Damit kann unter anderem die Flüssigkeitszufuhr aus dem Wirkstoffbehälter 27a, 27b, 27c in den zugeordneten Mischbehälter 28a, 28b, 28c erfolgen. Alternativ kann in dieser Stellung eine Zuführung von frischer Trägerflüssigkeit aus dem Vorratstank 16 erfolgen. Schließlich kann in einer dritten Ventilstellung der Durchsatz unterbunden werden, indem das Dosierventil 29a, 29b, 29c also abgesperrt wird. Das Ventil in der vorliegenden Form bietet den Vorteil, dass die Pumpen 30a, 30b, 30c mit Trägerflüssigkeit gereinigt werden können. Ansonsten wären hier auch 2/2-Wegeventile statt der dargestellten 3/3-Wegeventile denkbar oder auch andere Ventilanordnungen.

Um eine Umschaltung zwischen der Zuführung von frischer Trägerflüssigkeit aus dem Vorratstank 16 zur Verdünnung des Wirkstoffs und damit zur Herstellung der Vormischung einerseits und der Trennung des Trägerflüssigkeitssystems gegenüber dem Mischtank andererseits zu ermöglichen, ist ein zweites Umschaltventil 31a, 31b, 31c vorgesehen. Dieses Umschaltventil 31a, 31b, 31c ist zwischen dem Vorratstank 16 und Mischbehälter 28a, 28b, 28c angeordnet. Es ist dabei mit der Leitung zur Zuführung von frischer Spritzflüssigkeit verbunden. Ein Zurückpumpen von mit Spritzmitteln kontaminierter Flüssigkeit durch das Ventil ist durch die Verwendung eines entsprechenden Ventils 29a, 29b, 29c oder entsprechende Rückschlagventile vorzugsweise unterbunden.

Vor dem Mischbehälter 28a, 28b, 28c ist außerdem jeweils noch ein Rückschlagventil 32a, 32b, 32c vorgesehen. Diese sorgen dafür, dass ein Eindringen des Wirkstoffes in das Trägerstoffsystem unterbunden wird.

Jede Dosiereinheit 25a, 25b, 25c ist außerdem mit einer Dosierpumpe 30a, 30b, 30c ausgestattet. Diese Dosierpumpen 30a, 30b, 30c sind zwischen den Dosierventilen 29a, 29b, 29c und dem jeweiligen Mischbehälter 28a, 28b, 28c angeordnet. Sie weisen ein definiertes Fördervolumen auf, um eine korrekte Befüllung der nachfolgend angeordneten Mischbehälter 28a, 28b, 28c gewährleisten zu können. So kann durch Zeitmessung die Fördermenge ermittelt und die Einschaltdauer der jeweiligen Dosierpumpe 30a, 30b, 30c zur Herstellung der Vormischung verwendet werden.

Wird der Flüssigkeitsstand in den Vormischungsbehältern 28a, 28b, 28c mittels nicht dargestellten Sensoren, beispielsweise Füllstandssensoren in den Vormischungsbehältern 28a, 28b, 28c und/oder durch eine Überwachung der Ventilstellung der Ventile in den Dosiereinheiten 26a, 26b, 26c, 26d ... in Kombination mit Durchflussmessern und/oder Drucksensoren in den Flüssigkeitsleitungen überwacht, kann in Abhängigkeit der bekannten Förderleistung der Pumpen 30a, 30b, 30c ein rechtzeitiges Auffüllen der Vormischungsbehälter 28a, 28b, 28c erreicht werden. Das Wiederauffüllen der Vormischungsbehälter 28a, 28b, 28c wird vorzugsweise durch ein nicht dargestelltes Steuergerät an der Feldspritze oder einem Traktor gesteuert und überwacht. Insbesondere kann durch das Steuergerät auch der Verlauf des Füllstandes über die Zeit protokolliert und ein Leerstand oder das Unterschreiten eines Grenzwertes für den Füllstand hieraus prognostiziert werden. Auf diese Weise kann durch das Steuergerät sichergestellt werden, dass keiner der Vormischungsbehälter 28a, 28b, 28c zu irgendeinem Zeitpunkt leerläuft und das Wiederauffüllen stets rechtzeitig erfolgt. Es ist somit möglich auch Pumpen 30a, 30b, 30c mit vergleichsweise eng begrenzter Förderleistung zu wählen, da ein Wiederauffüllen der Vormischungsbehälter während des Betriebs zu beliebigen Zeitpunkten erfolgen kann und nicht zeitkritisch ist, sofern noch ausreichend Vormischungsflüssigkeit in dem Vormischungsbehälter bevorratet ist. Die Dosierpumpen 30a, 30b, 30c dienen also dazu, die Flüssigkeiten entsprechend zu fördern. Einerseits wird eine Entnahme des Wirkstoffs aus dem jeweiligen Wirkstoffbehälter 27a, 27b, 27c und eine Zuführung in den zugeordneten Mischbehälter 28a, 28b, 28c ermöglicht. Andererseits wird auch eine Reinigung des Dosiersystems ermöglicht.

In den folgenden Ausführungen wird eine ausbringfähige Verdünnung auf Teilbreitenebene beschrieben. In analoger Weise erfolgt erfindungsgemäß die Abgabe der Spritzflüssigkeit düsenweise und die ausbringfähige Verdünnung der Vormischungsflüssigkeit erfolgt bei Freigabe der entsprechenden Spritzdüse.

In der zweiten Dosierstufe 24 wird dann die Vormischung für jede Teilbreite der Feldspritze 10 separat auf die ausbringfähige Konzentration verdünnt. Dazu ist für jede Teilbreite der Feldspritze 10 eine separate Dosiereinheit 26a, 26b, 26c, 26d vorgesehen. Diese weist jeweils Dosierventile 34a, 34b, 34c, 34d für jede der Vormischungen einerseits und für frische Trägerflüssigkeit andererseits auf. Die Trägerflüssigkeit wird aus dem Vorratstank 16 mittels einer Pumpe 33 gefördert.

Diese Dosierventile 34a, 34b, 34c, 34d dienen jeweils dazu, die richtige Mischung aus Vormischung und Spritzflüssigkeit in Abhängigkeit von den Anforderungen je Teilbreite und abhängig von der Bodenbeschaffenheit bzw. dem Wirkstoffbedarf einzustellen. Rückschlagventile 35a, 35b, 35c, 35d dienen auch hier dazu, unerwünschte Rückflüsse durch die Dosierventile 34a, 34b, 34c, 34d zu vermeiden. Gegebenenfalls können auch noch zusätzliche Stellglieder für die hier nicht im Detail gezeigten Spritzdüsen am Spritzgestänge 12 vorgesehen sein, mit denen sich Durchsatz und/oder Spritzcharakteristik verändern lassen.

Die Vormischung wird nun in dem jeweiligen Mischbehälter 28a, 28b, 28c durch geeignete Zugabemengen wenigstens eines der Wirkstoffe beziehungsweise Spritzmittels einerseits und durch Zugabe frischer Trägerflüssigkeit aus dem Vorrat 16 andererseits vorbereitet. Zur Zuführung der Wirkstoffe werden die entsprechenden Dosierpumpen 30a, 30b, 30c betrieben. Ein anschließendes Umwälzen mittels der Dosierpumpen 36a, 36b, 36c kann nach Erstellung der Vormischung über die Vormischungskreisläufe 37a, 37b, 37c erfolgen. Der Vorteil einer solchen Umwälzung besteht hierbei darin, dass die jeweilige Vormischung immer an den Ventilen 34a, 34b, 34c ohne Verzögerung ansteht und zudem ein permanentes Umwälzen der Vormischung in den Behältern 28a, 28b, 28c erfolgt, was eine unerwünschte Trennung der typischerweise als Emulsion vorliegenden Mischung in Spritzmittel und Trägerflüssigkeit verhindert.

So kann jeder der Mischbehälter 28a, 28b, 28c beispielsweise vollständig mit der jeweiligen Vormischung aufgefüllt werden. Die Vormischungen werden dabei erfindungsgemäß mit einer Konzentration des jeweiligen Spritzmittels beziehungsweise Wirkstoffs vorbereitet, die eine unmittelbare Vermischung gleicher oder zumindest ähnlicher Mengen der Vormischung zusammen mit einer entsprechenden Menge der frischen Trägerflüssigkeit durch die Spritzeinrichtung ermöglicht. Zur Förderung der Vormischung zur zweiten Dosierstufe 24 und damit zu den Spritzdüsen sind die Förderpumpen 36a, 36b, 36c zwischen den Dosierstufen 23 und 24 vorgesehen.

So kann auf einfache Weise in der zweiten Dosierstufe 24 die endgültige ausbringfähige Mischung aus der Vormischung der ersten Dosierstufe 23 hergestellt werden. Die ausbringfähige Mischung wird dann als sogenannte Spritzflüssigkeit wie beschrieben mittels der Spritzdüsen am Spritzgestänge 12 auf der landwirtschaftlichen Fläche ausgebracht.

In einem nicht dargestellten Steuergerät kann insbesondere die Förderleistung der Pumpen 36a, 36b, 36c hinterlegt sein, so dass sich die Verdünnungsverhältnisse in den Vormischungsbehältern 28a, 28b, 28c an die jeweilige Aufwandmenge, also die Ausbringrate Wirkstoff pro Fläche bzw. pro Zeit bei Berücksichtigung der Fahrgeschwindigkeit anpassen lassen. Hierzu ist dem Steuergerät die pro Fläche auszubringende Wirkstoffmenge, die Arbeitsbreite der Feldspritze und ggf. die Fahrgeschwindigkeit bekannt oder alternativ ein Geschwindigkeitsbereich, welcher für die Bearbeitung verwendet wird. Aus diesen Daten kann eine Vormischungskonzentration durch das Steuergerät berechnet werden, welche auf die Förderleistung der Pumpe abgestimmt ist. Dies führt zu dem Vorteil, dass auch für den Fall von Wirkstoffen PSM1 und PSM2, die mit sehr unterschiedlichen Mengen pro Fläche ausgebracht werden müssen, baugleiche Pumpen 36a, 36b verwendet werden können, indem das Mischungsverhältnis in den Vormischungsbehältern 28a, 28b, 28c so gewählt wird, dass die geförderte Flüssigkeitsmenge an Vormischungsflüssigkeit zumindest in derselben Größenordnung liegt.

Zu diesem Zweck kann das Steuergerät ausgebildet sein, das für die verwendeten Pumpen 36a, 36b, 36c ideale Verdünnungsverhältnis für die jeweilige Vormischung aus der auszubringenden Menge Wirkstoff PSM1, PSM2, PSM3 pro Fläche und der bekannten Arbeitsbreite und ggf. Fahrgeschwindigkeit zu ermitteln. Es kann auch eine konstante Fahrgeschwindigkeit angenommen und somit das Vormischungsverhältnis nur in Abhängigkeit der Wirkstoffmenge pro Fläche unter Berücksichtigung der Arbeitsbreite berechnet werden.

Das nicht dargestellte Steuergerät ist zudem vorzugsweise ausgelegt, die Dosierorgane, wie die Pumpen 30a, 30b, 30c, 33 und Ventile 29a, 29b, 29c, 31a, 31b, 31c derart anzusteuern, dass sich das gewünschte Mischungsverhältnis in den Vormischungsbehältern 28a,28b, 28c einstellt. Zu diesem Zweck können ggf. auch Füllstandsensoren in den Vormischungsbehältern 28a, 28b, 28c und/oder den Wirkstoffbehältern 27a, 27b, 27c und/oder dem Trägerflüssigkeitsbehälter 16 und/oder weitere Sensoren, wie Durchflusssensoren in den Zuleitungen durch das Steuergerät ausgelesen werden, aus denen sich das Mischungsverhältnis in dem jeweiligen Vormischungsbehälter berechnen lässt.

Zur Vermischung der Wirkstoffe untereinander und der Trägerflüssigkeit zur endgültigen Spritzbrühe kann eine hier nicht dargestellte, zusätzliche Mischkammer im Bereich der Spritzdüsen vorzugsweise an jeder Spritzdüse vorgesehen sein.

### Bezugszeichenliste

- 10: Feldspritze
- 11: Zugfahrzeug
- 12: Spritzgestänge
- 13: Fahrwerk
- 14: Achse
- 15: Rad
- 16: Vorratstank
- 17: Mischtanksystem
- 18: Rahmen
- 19: Spritzdüse
- 22: Flüssigkeitskreislauf
- 23: erste Dosierstufe
- 24: zweite Dosierstufe
- 25a, 25b, 25c: Dosiereinheit
- 26a, 26b, 26c, 26d: Dosiereinheit
- 27a, 27b, 27c: Wirkstoffbehälter
- 28a, 28b, 28c: Vormischbehälter
- 29a, 29b, 29c: Dosierventil
- 30a, 30b, 30c: Dosierpumpe
- 31a, 31b, 31c: Umschaltventil
- 32a, 32b, 32c: Rückschlagventil
- 33: Pumpe
- 34a, 34b, 34c, 34d: Dosierventil
- 35a, 35b, 35c, 35d: Rückschlagventil
- 36a, 36b, 36c: Förderpumpe
- 37a, 37b, 37c: Vormischungskreislauf

## Patentansprüche

1. Verfahren zum Ausbringen einer Spritzflüssigkeit auf einer landwirtschaftlichen Fläche mittels einer Spritzvorrichtung, vorzugsweise Feldspritze (10), und/oder zum Betreiben einer Spritzvorrichtung, vorzugsweise einer Feldspritze (10), wobei wenigstens ein Spritzmittel mit einer Trägerflüssigkeit zu einer ausbringbaren Spritzflüssigkeit verdünnt und ausgebracht wird, wobei das Spritzmittel vorzugsweise wenigstens einen Wirkstoff enthält, wobei wenigstens eine konzentrierte Vormischungsflüssigkeit in zumindest einem Vormischungsbehälter (28a, 28b, 28c) aus einer Menge des Spritzmittels und einer Menge Trägerflüssigkeit hergestellt und bevorratet wird, wobei das Spritzmittel beziehungsweise der wenigstens eine Wirkstoff mit der Trägerflüssigkeit zur Vormischungsflüssigkeit derart verdünnt wird, dass eine vorherbestimmte Konzentration des Spritzmittels beziehungsweise des wenigstens einen Wirkstoffs erreicht wird, **dadurch gekennzeichnet, dass** diese wenigstens eine Vormischungsflüssigkeit zum Ausbringen mit einer weiteren Menge Trägerflüssigkeit zur ausbringbaren Spritzflüssigkeit verdünnt wird, wobei eine ausbringfähige Verdünnung der Vormischungsflüssigkeit bei Freigabe der entsprechenden Spritzdüse vorgenommen wird.

2. Verfahren nach Anspruch 1, **dadurch gekennzeichnet, dass** für jedes verwendete Spritzmittel, vorzugsweise für jeden Wirkstoff, eine separate Vormischungsflüssigkeit hergestellt wird.

3. Verfahren nach Anspruch 1 oder 2, **dadurch gekennzeichnet, dass** jede Vormischungsflüssigkeit in zumindest einem separaten Vormischungsbehälter (28a, 28b, 28c) bevorratet wird.

4. Verfahren nach einem der vorhergehenden Ansprüche, **dadurch gekennzeichnet, dass** wenigstens eine Vormischungsflüssigkeit mittels eines Vormischungskreislaufes (37a, 37b, 37c) umgepumpt wird, vorzugsweise zwischen einem Vormischungsbehälter (28a, 28b, 28c) und wenigstens einer Spritzdüse, wobei insbesondere ein Vermischen beziehungsweise Umwälzen im Vormischbehälter (28a, 28b, 28c) erfolgt.

5. Verfahren nach einem der vorhergehenden Ansprüche, **dadurch gekennzeichnet, dass** ein vorbekanntes Volumen der oder jeder Vormischflüssigkeit angemischt wird, wobei die Vormischflüssigkeit vorzugsweise in einem Vormischungsbehälter (28a, 28b, 28c) mit bekanntem Volumen angemischt wird, wobei vorzugsweise alle Vormischungsbehälter (28a, 28b, 28c) dasselbe Volumen aufweisen.

6. Verfahren nach einem der vorhergehenden Ansprüche, **dadurch gekennzeichnet, dass** vorzugsweise alle Vormischungsflüssigkeiten mit derart vordefinierter Konzentration des Spritzmittels beziehungsweise des wenigstens einen Wirkstoffs angemischt werden, dass ein identisches oder vergleichbares Verdünnungsverhältnis mit Trägerflüssigkeit zum Ausbringen für eine vorgesehene Wirkung erforderlich ist.

7. Verfahren nach einem der vorhergehenden Ansprüche, **dadurch gekennzeichnet, dass** vorzugsweise alle Vormischungsflüssigkeiten mit derart vordefinierter Konzentration des Spritzmittels beziehungsweise des wenigstens einen Wirkstoffs angemischt werden, dass die für den Spritzvorgang zu fördernde Rate an Vormischungsflüssigkeit auf die hierfür verwendete Pumpe abgestimmt ist.

8. Verfahren nach einem der vorhergehenden Ansprüche, **dadurch gekennzeichnet, dass** der Füllstand im Vormischungsbehälter (28a, 28b, 28c) ermittelt wird, vorzugsweise zur Ermittlung der Restmenge und/oder des erforderlichen Wiederauffüllens, wobei dies vorzugsweise mittels wenigstens eines Sensors erfolgt, wobei der wenigstens eine Sensor insbesondere zur Ermittlung des Füllstands, der Durchflussmenge, der Entnahmemenge, der Ventilstände und/oder des Drucks dient.

9. Spritzvorrichtung, vorzugsweise Feldspritze, zum Ausbringen einer Spritzflüssigkeit auf einer landwirtschaftlichen Fläche mit einem Flüssigkeitskreislauf und einem Steuergerät , welches eingerichtet zu bewirken, dass die Spritzvorrichtung das Verfahren nach einem der Ansprüche 1-8 ausführt, wobei wenigstens ein Vormischungsbehälter (28a, 28b, 28c) zur Herstellung und Bevorratung einer konzentrierten Vormischungsflüssigkeit aus wenigstens einem Spritzmittel und einer Trägerflüssigkeit vorgesehen ist und Mittel zum Abgeben der Spritzflüssigkeit düsenweise vorgesehen sind, sowie Mittel zur ausbringfähigen Verdünnung der Vormischungsflüssigkeit zur Herstellung der Spritzflüssigkeit bei Freigabe der entsprechenden Spritzdüse.

10. Spritzvorrichtung nach Anspruch 9, **dadurch gekennzeichnet, dass** für jede der Vormischungsflüssigkeiten zumindest ein separater Vormischungsbehälter (28a, 28b, 28c) vorgesehen ist, wobei die Vormischungsbehälter (28a, 28b, 28c) vorzugsweise dasselbe Volumen aufweisen.

11. Spritzvorrichtung nach Anspruch 9 oder 10, **dadurch gekennzeichnet, dass** wenigstens ein Flüssigkeitskreislauf zum Umpumpen der wenigstens einen Vormischungsflüssigkeit zwischen dem wenigstens einen Vormischungsbehälter (28a, 28b, 28c) und wenigstens einer Spritzdüse (19) der Spritzeinrichtung vorgesehen ist, wobei insbesondere ein separater Flüssigkeitskreislauf (37a, 37b, 37c) für jede Vormischungsflüssigkeit vorgesehen ist und wobei vorzugsweise zusätzlich ein Kreislauf für die Trägerflüssigkeit vorgesehen ist.

12. Spritzvorrichtung nach einem der Ansprüche 9 bis 11, **dadurch gekennzeichnet, dass** die Spritzdüsen (19) für eine düsenweise Freigabe der Abgabe der Spritzflüssigkeit vorgesehen sind, indem ein düsenweises Zusammenmischen von Vormischflüssigkeit und Trägerflüssigkeit erfolgt.

13. Spritzvorrichtung nach einem der Ansprüche 9 bis 12, **dadurch gekennzeichnet, dass** eine separate Ventileinheit (34a, 34b, 34c, 34d) und/oder Dosierpumpe und/oder Mischkammer (28a, 28b, 28c) je Spritzdüse (19) vorgesehen ist.

14. Spritzvorrichtung nach einem der Ansprüche 9 bis 13, **dadurch gekennzeichnet, dass** wenigstens eine Mischkammer (28a, 28b, 28c) zur Verdünnung der wenigstens einen Vormischflüssigkeit mit Trägerflüssigkeit in der Nähe oder an der Spritzdüse (19) vorgesehen ist, vorzugsweise eine separate Mischkammer (28a, 28b, 28c) je Spritzdüse (19) der Spritzvorrichtung.

15. Spritzvorrichtung nach einem der Ansprüche 9 bis 14, **dadurch gekennzeichnet, dass** zur Ermittlung des Füllstands im Vormischungsbehälter (28a, 28b, 28c), vorzugsweise zur Ermittlung der Restmenge und/oder des erforderlichen Wiederauffüllens, wenigstens ein Sensor vorgesehen ist, wobei der wenigstens eine Sensor insbesondere zur Ermittlung des Füllstands, der Durchflussmenge, der Entnahmemenge, der Ventilstände und/oder des Drucks dient.

## Claims

1. Method for applying a spraying liquid on an agricultural area by means of a spraying device, preferably a field sprayer (10), and/or for operating a spraying device, preferably a field sprayer (10), wherein at least one spraying agent is diluted with a carrier liquid to form an appliable spraying liquid and applied, wherein the spraying agent preferably contains at least one active substance, wherein at least one concentrated pre-mixing liquid is produced in at least one pre-mixing container (28a, 28b, 28c) from a quantity of the spraying agent and a quantity of carrier liquid and stored, wherein the spraying agent or the at least on active substance is diluted with the carrier liquid to form a pre-mixing liquid in such a manner that a previously determined concentration of the spraying agent of the at least one active substance is achieved, **characterized in that** said at least one pre-mixing liquid for application is diluted with a further quantity of carrier liquid to form the spraying liquid which can be applied, wherein a dilution of the pre-mixing liquid so as to be capable of application is undertaken when the corresponding spray nozzle is opened up.

2. Method according to Claim 1, **characterized in that** a separate pre-mixing liquid is produced for each spraying agent used, preferably for each active substance.

3. Method according to Claim 1 or 2, **characterized in that** each pre-mixing liquid is stored in at least one separate pre-mixing container (28a, 28b, 28c).

4. Method according to one of the preceding claims, **characterized in that** at least one pre-mixing liquid is recirculated by means of a pre-mixing circuit (37a, 37b, 37c), preferably between a pre-mixing container (28a, 28b, 28c) and at least one spray nozzle, wherein in particular mixing and/or recirculating takes place in the pre-mixing container (28a, 28b, 28c).

5. Method according to one of the preceding claims, **characterized in that** a previously known volume of the or each pre-mixing liquid is blended, wherein the pre-mixing liquid is blended preferably in a pre-mixing container (28a, 28b, 28c) having a known volume, wherein preferably all the pre-mixing containers (28a, 28b, 28c) have the same volume.

6. Method according to one of the preceding claims, **characterized in that** preferably all the pre-mixing liquids are blended with such a pre-defined concentration of the spraying agent or of the at least one active substance that an identical or comparable dilution ratio with carrier liquid is required for application for an intended effect.

7. Method according to one of the preceding claims, **characterized in that** preferably all the pre-mixing liquids are blended with such a pre-defined concentration of the spraying agent or of the at least one active substance that the rate of pre-mixing liquid to be conveyed for the spraying operation is coordinated with the pump used for this purpose.

8. Method according to one of the preceding claims, **characterized in that** the filling level in the pre-mixing container (28a, 28b, 28c) is determined, preferably in order to determine the residual quantity and/or the required re-filling, wherein this preferably takes place by means of at least one sensor, wherein the at least one sensor serves in particular for determining the filling level, the flow rate, the delivery rate, the valve states and/or the pressure.

9. Spraying device, preferably field sprayer, for applying a spraying liquid on an agricultural area, with a liquid circuit and a control device which is designed to cause the spraying device to carry out the method according to one of Claims 1-8, wherein at least one pre-mixing container (28a, 28b, 28c) is provided for producing and storing a concentrated pre-mixing liquid consisting of at least one spraying agent and a carrier liquid, and means are provided for delivering the spraying liquid by nozzles, and means are provided for diluting the pre-mixing liquid so as to capable of application in order to produce the spraying liquid when the corresponding spray nozzle is opened up.

10. Spraying device according to Claim 9, **characterized in that** at least one separate pre-mixing container (28a, 28b, 28c) is provided for each of the pre-mixing liquids, wherein the pre-mixing containers (28a, 28b, 28c) preferably have the same volume.

11. Spraying device according to Claim 9 or 10, **characterized in that** the at least one liquid circuit is provided for circulating the at least one pre-mixing liquid between the at least one pre-mixing container (28a, 28b, 28c) and at least one spray nozzle (19) of the spraying device, wherein in particular a separate liquid circuit (37a, 37b, 37c) is provided for each pre-mixing liquid, and wherein preferably a circuit is additionally provided for the carrier liquid.

12. Spraying device according to one of Claims 9 to 11, **characterized in that** the spray nozzles (19) are provided for releasing the delivery of the spraying liquid by nozzle by pre-mixing liquid and carrier liquid being mixed together by the nozzles.

13. Spraying device according to one of Claims 9 to 12, **characterized in that** a separate valve unit (34a, 34b, 34c, 34d) and/or metering pump and/or mixing chamber (28a, 28b, 28c) is provided per spray nozzle (19).

14. Spraying device according to one of Claims 9 to 13, **characterized in that** at least one mixing chamber (28a, 28b, 28c) is provided for diluting the at least one pre-mixing liquid with carrier liquid in the vicinity of or at the spray nozzle (19), preferably a separate mixing chamber (28a, 28b, 28c) per spray nozzle (19) of the spraying device.

15. Spraying device according to one of Claims 9 to 14, **characterized in that** at least one sensor is provided for determining the filling level in the pre-mixing container (28a, 28b, 28c), preferably for determining the residual quantity and/or the required re-filling, wherein the at least one sensor serves in particular for determining the filling level, the flow rate, the delivery rate, the valve states and/or the pressure.

## Revendications

1. Procédé d'épandage d'un liquide à pulvériser sur une surface agricole au moyen d'un dispositif de pulvérisation, de préférence d'un pulvérisateur agricole (10), et/ou d'exploitation d'un dispositif de pulvérisation, de préférence d'un pulvérisateur agricole (10), au moins un agent à pulvériser étant dilué avec un liquide porteur pour former un liquide à pulvériser pouvant être épandu et épandu, l'agent à pulvériser contenant de préférence au moins une substance active, au moins un liquide de prémélange concentré étant préparé et stocké dans au moins un récipient de prémélange (28a, 28b, 28c) à partir d'une quantité de l'agent à pulvériser et d'une quantité de liquide porteur, l'agent à pulvériser ou l'au moins une substance active étant dilué avec le liquide porteur pour former le liquide de prémélange de telle sorte qu'une concentration prédéterminée de l'agent à pulvériser ou de l'au moins une substance active est atteinte, **caractérisé en ce que** cet au moins un liquide de prémélange est dilué pour l'épandage avec une autre quantité de liquide porteur pour former le liquide à pulvériser pouvant être épandu, une dilution permettant l'épandage du liquide de prémélange étant effectuée lors de la libération de la buse de pulvérisation correspondante.

2. Procédé selon la revendication 1, **caractérisé en ce qu'**un liquide de prémélange séparé est préparé pour chaque agent à pulvériser utilisé, de préférence pour chaque substance active.

3. Procédé selon la revendication 1 ou 2, **caractérisé en ce que** chaque liquide de prémélange est stocké dans au moins un récipient de prémélange séparé (28a, 28b, 28c) .

4. Procédé selon l'une quelconque des revendications précédentes, **caractérisé en ce qu'**au moins un liquide de prémélange est pompé au moyen d'un circuit de prémélange (37a, 37b, 37c), de préférence entre un récipient de prémélange (28a, 28b, 28c) et au moins une buse de pulvérisation, un mélange ou une circulation ayant notamment lieu dans le récipient de prémélange (28a, 28b, 28c) .

5. Procédé selon l'une quelconque des revendications précédentes, **caractérisé en ce qu'**un volume connu à l'avance du ou de chaque liquide de prémélange est mélangé, le liquide de prémélange étant de préférence mélangé dans un récipient de prémélange (28a, 28b, 28c) de volume connu, tous les récipients de prémélange (28a, 28b, 28c) présentant de préférence le même volume.

6. Procédé selon l'une quelconque des revendications précédentes, **caractérisé en ce que**, de préférence, tous les liquides de prémélange sont mélangés avec une concentration prédéfinie de l'agent à pulvériser ou de l'au moins une substance active, de telle sorte qu'un rapport de dilution identique ou comparable avec le liquide porteur est nécessaire pour l'épandage pour une action prévue.

7. Procédé selon l'une quelconque des revendications précédentes, **caractérisé en ce que**, de préférence, tous les liquides de prémélange sont mélangés avec une concentration prédéfinie de l'agent à pulvériser ou de l'au moins une substance active, de telle sorte que le taux de liquide de prémélange à transporter pour le processus de pulvérisation est adapté à la pompe utilisée pour cela.

8. Procédé selon l'une quelconque des revendications précédentes, **caractérisé en ce que** le niveau de remplissage dans le récipient de prémélange (28a, 28b, 28c) est déterminé, de préférence pour déterminer la quantité restante et/ou le remplissage nécessaire, ceci s'effectuant de préférence au moyen d'au moins un capteur, l'au moins un capteur servant notamment à déterminer le niveau de remplissage, le débit, la quantité prélevée, les niveaux de vannes et/ou la pression.

9. Dispositif de pulvérisation, de préférence pulvérisateur agricole, pour l'épandage d'un liquide à pulvériser sur une surface agricole, comprenant un circuit de liquide et un appareil de commande, qui est conçu pour amener le dispositif de pulvérisation à réaliser le procédé selon l'une quelconque des revendications 1 à 8,
au moins un récipient de prémélange (28a, 28b, 28c) étant prévu pour la préparation et le stockage d'un liquide de prémélange concentré composé d'au moins un agent à pulvériser et d'un liquide porteur, et des moyens pour la distribution du liquide à pulvériser par buses étant prévus, ainsi que des moyens pour la dilution permettant l'épandage du liquide de prémélange pour la préparation du liquide à pulvériser lors de la libération de la buse de pulvérisation correspondante.

10. Dispositif de pulvérisation selon la revendication 9, **caractérisé en ce qu'**au moins un récipient de prémélange séparé (28a, 28b, 28c) est prévu pour chacun des liquides de prémélange, les récipients de prémélange (28a, 28b, 28c) présentant de préférence le même volume.

11. Dispositif de pulvérisation selon la revendication 9 ou 10, **caractérisé en ce qu'**au moins un circuit de liquide est prévu pour pomper l'au moins un liquide de prémélange entre l'au moins un récipient de prémélange (28a, 28b, 28c) et au moins une buse de pulvérisation (19) de l'appareil de pulvérisation, un circuit de liquide séparé (37a, 37b, 37c) étant notamment prévu pour chaque liquide de prémélange et un circuit étant de préférence prévu en outre pour le liquide porteur.

12. Dispositif de pulvérisation selon l'une quelconque des revendications 9 à 11, **caractérisé en ce que** les buses de pulvérisation (19) sont prévues pour une libération par buses de la distribution du liquide à pulvériser, par le fait qu'un mélange par buses du liquide de prémélange et du liquide porteur a lieu.

13. Dispositif de pulvérisation selon l'une quelconque des revendications 9 à 12, **caractérisé en ce que caractérisé en ce qu'**une unité de soupape (34a, 34b, 34c, 34d) et/ou une pompe de dosage et/ou une chambre de mélange (28a, 28b, 28c) séparée est prévue pour chaque buse de pulvérisation (19).

14. Dispositif de pulvérisation selon l'une quelconque des revendications 9 à 13, **caractérisé en ce qu'**au moins une chambre de mélange (28a, 28b, 28c) est prévue pour diluer l'au moins un liquide de prémélange avec du liquide porteur à proximité ou au niveau de la buse de pulvérisation (19), de préférence une chambre de mélange séparée (28a, 28b, 28c) pour chaque buse de pulvérisation (19) du dispositif de pulvérisation.

15. Dispositif de pulvérisation selon l'une quelconque des revendications 9 à 14, **caractérisé en ce qu'**au moins un capteur est prévu pour déterminer le niveau de remplissage dans le récipient de prémélange (28a, 28b, 28c), de préférence pour déterminer la quantité restante et/ou le remplissage nécessaire, l'au moins un capteur servant notamment à déterminer le niveau de remplissage, le débit, la quantité prélevée, les niveaux de vannes et/ou la pression.
